# EUROPÄISCHE PATENTSCHRIFT

(11) **EP 0 377 410 B1**
(45) Veröffentlichungstag und Bekanntmachung des Hinweises auf die Patenterteilung: **01.12.1993**
(21) Anmeldenummer: 89810977.2
(22) Anmeldetag: 22.12.1989
(51) Int. Cl.: B23D 71/04

(54) **Feile oder Raspel**
File or rasp
Lime ou râpe

(30) Priorität: 04.01.1989 CH 26/89
(43) Veröffentlichungstag der Anmeldung: 11.07.1990
(73) Patentinhaber: BAITER AG, CH-8355 Aadorf (CH)
(72) Erfinder: Jandl, Wilhelm, CH-8355 Aadorf (CH)
(74) Vertreter: Amsler, Martin

(56) Entgegenhaltungen:
- DE-C- 38 885
- DE-C- 54 693
- DE-C- 113 414
- GB-A- 569 675

## Beschreibung

Die Erfindung bezieht sich auf eine Feile oder Raspel, die es ermöglicht, in ein elektrisch oder pneumatisch betriebenes Gerät mit einem mechanisch betätigten Stössel eingesetzt und mittels eines solchen Gerätes betrieben zu werden. Derartige Geräte, deren Stössel entweder auf elektrischem Wege oder mittels Druckluft betätigt werden, sind in verschiedenen Ausführungen bekannt, dienen aber herkömmlich in erster Linie zum Betreiben von Sägen. Verbreitet sind zum Beispiel die sogenannten Stichsägen. Das etwa 5 bis 10 cm lange Stichsägeblatt wird vom mechanischen Stössel des Gerätes zu der zu zersägenden Platte senkrecht hin und her beziehungsweise auf und ab bewegt. Der Sägevorgang erfolgt dabei, wenn das Sägeblatt gegen das Gerät hin gezogen wird. Entsprechend ist die Zahnung des eingespannten Sägeblattes gegen das Gerät hin gerichtet. Im allgemeinen ist bei diesen Stichsägen der Hub des Stössels relativ klein. Neuerdings sind Sägegeräte mit grösserem Hub im Handel. So ist zum Beispiel ein Gerät bekanntgeworden, das eine mechanische Fuchsschwanzsäge bildet (Bosch-Fuchsschwanz). Dieses Gerät erlaubt das Einspannen und Betreiben eines viel längeren, dickeren und daher stabileren Sägeblattes, das sodann als Fuchsschwanzsäge dienen kann. Bei dieser mechanischen Fuchsschwanzsäge ist die Zahnung nicht mehr bezüglich einer Richtung ausgezeichnet. Der Sägevorgang erfolgt also nicht nur beim Ziehen des Sägeblattes gegen das Gerät hin, sondern auch beim Wegstossen des Sägeblattes. Ebenfalls bei der Bearbeitung gestossen wird eine Feile oder Raspel. Bisher gibt es aber weder eine mechanisch betätigbar Feile noch eine solche Raspel, die in ein derartiges Gerät mit mechanischen Stossel einsetzbar wäre. Mit Handfeilen oder -raspeln ist es im allgemeinen schwierig, schlecht zugängliche Stellen zu bearbeiten, insbesondere wenn nur Raum für eine ganz kleine Stossbewegung vorhanden ist und mit der Hand die Spitze der Feile oder Raspel nicht ergriffen werden kann. Angesichts der Sägegeräte, welche auch beim Stossen einen Sägevorgang ausüben, kam deshalb die Idee auf, eine Feile zu schaffen, welche ähnlich der mechanischen Fuchsschwanzsäge die Stossbewegung eines mechanischen Stössels eines derartigen Gerätes nützt und damit insbesondere die Bearbeitung von schlecht zugänglichen Stellen erleichtert. Auch eine Raspel, die mittels solcher Geräte einsetzbar wäre, ist erwünscht. Da das Einsetzen eines Werkzeuges in ein solches Gerät aber einen gewissen Aufwand erfordert, sollte eine solche Feile oder Raspel als Mehrzweckwerkzeug ausgebildet sein. Ausserdem ist bei der Konstruktion einer solchen Feile oder Raspel zu berücksichtigen, dass das Werkzeug beim Einsatz mittels eines solchen Gerätes ganz anderen Kräften ausgesetzt ist als ein normales, von Hand betätigtes Werkzeug. Die von Hand betätigte Feile oder Raspel wird relativ langsam hin und her bewegt. Zum Feilen oder Raspeln wird mit einer Hand deren Griff erfasst und die hin und her gehende Bewegung bewirkt, während mit der anderen Hand das äussere Ende des Werkzeuges erfasst und der Auflagedruck dosiert wird. Bei der mechanisch hin- und herbewegten Feile oder Raspel hingegen wird der Bearbeitungsdruck ausschliesslich von der Griffseite her ausgeübt und auch die Hin- und Herbewegung des Werkzeuges ist bedeutend schneller. Da aber die Feile zum Einsetzen in die Kupplungsorgange der bestehenden Stichsägengeräte oder des mechanischen Fuchsschwanzes insbesondere beim Kupplungsorgan weniger stark als übliche Handfeilen oder Raspeln ausgeführt sein müssen, war das Problem zu lösen, trotzdem ein Werkzeug mit der nötigen Stabilität zu schaffen.

Aus der Patentschrift GB 569 675 ist eine Feile bekannt, bei der der Feilenkörper aus zwei in einem Winkel zueinanderstehenden Flanken gebildet ist. Diese Feile ist jedoch als Handfeile gedacht und ist daher nicht in ein elektrisch oder pneumatisch betriebenes Gerät einsetzbar.

Die Erfindung stellt sich deshalb zur Aufgabe, eine Feile oder Raspel zu schaffen, die es ermöglicht, in ein elektrisch oder pneumatisch betriebenes Gerät mit einem mechanisch betätigten Stössel eingesetzt und mittels eines solchen Gerätes betrieben zu werden.

Die Erfindung löst die gestellte Aufgabe durch eine Feile oder Raspel mit einem Feilen- oder Raspelkörper der als einstückiges Winkelprofil mit zwei in einem Winkel zueinanderstehenden Flanken ausgebildet ist, wobei eine Flanke die andere in der Länge überragt und das überragende Teil als Kupplungsorgan ausgebildet ist, mittels dessen die Feile oder Raspel in allen Richtungen kraftschlüssig an einen mechanisch betätigten Stössel eines Gerätes kuppelbar ist, und wobei das Kupplungsorgan sowohl unten wie auch oben einen einmal gegen die Flankenlängsmitte hin versetzten Längsrand aufweist, sodass zwei senkrechte Stufen gebildet werden, wobei die gegen unten gerichtete Stufe gegenüber der nach oben gerichteten Stufe zurückversetzt ist, und wobei im Bereich der Stufe ausserdem ein Querloch vorhanden ist, das zur Aufnahme eines Bolzens bestimmt ist.

In den Zeichnungen sind zwei Ausführungsbeispiele der Erfindung dargestellt.

Es zeigt:
- Figur 1: eine Seitenansicht einer erfindungsgemässen Feile;
- Figur 1a: einen Schnitt entlang der Linie A-A von Figur 1;
- Figur 1b: einen Schnitt entlang der Linie B-B von Figur 1;
- Figur 1c: eine Frontansicht des Kupplungsorgans in Richtung des Pfeiles X in Figur 1 gesehen;
- Figur 2: eine Ansicht der Feile nach Figur 1 von unten;
- Figur 3: eine Ansicht der Feile nach Figur 1 von der Rückseite her gesehen mit einem behauenen Flankenrand.
- Figur 4: eine Seitenansicht einer erfindungsgemässen Raspel;
- Figur 5: die Raspel nach Figur 4 von rechts her gesehen;
- Figur 6: eine Ansicht der Raspel von oben in Richtung des Pfeiles Y in Figur 4 gesehen.

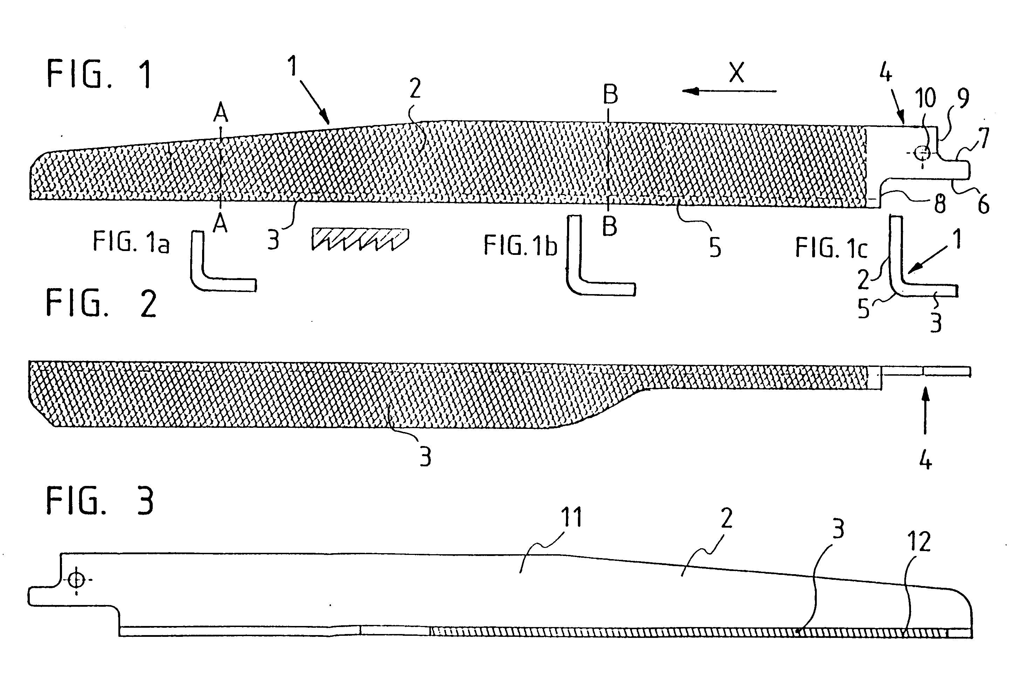

Die Figuren 1 sowie 1a-1c zeigen eine Feile, die erfindungsgemäss aus einem einstückigen Winkelprofil 1 mit zwei in einem Winkel zueinanderstehenden Flanken 2,3 gebildet ist. Die eine Flanke 2 überragt die andere 3 in der Länge und das überragende Teil 4 ist als Kupplungsorgan 4 ausgebildet, mittels dessen die Feile in allen Richtungen kraftschlüssig an einen mechanisch betätigten Stössel eines Gerätes kuppelbar ist. Das winkelförmige Querschnittsprofil der Feile gewährleistet eine hohe Belastbarkeit bei gleichzeitig relativ dünnwandigen Flanken und entsprechend geringem Gewicht der Feile. Ein geringes Gewicht ist von besonderer Wichtigkeit, weil der motorische Antriebsmechanismus des Gerätes, in das die Feile eingespannt wird, in der Regel eine Hubzahl von etwa 500 bis 2'600 pro Minute aufweist und deshalb eine hohe Trägheit der Feile vermieden werden muss. Die beiden aussen behauenen Flanken 2,3 oder Schenkel schliessen hier einen Winkel von etwa 90° ein. Die beiden Flanken bilden aussen eine Kante 5, die abgerundet ist, also eine Rundung 5 bildet, wie das insbesondere aus den Figuren 1a bis 1c ersichtlich ist. Figur 1c zeigt die Feile in einer Frontansicht auf das Kupplungsorgan 4 in der Richtung des Pfeils X in Figur 1 gesehen. Die Rundung 5, welche die beiden Aussenseiten der Flanken 2 und 3 verbindet, weist zusammen mit den beiden Flanken 2,3 einen durchgehenden Hieb auf. Die in Figur 1 ersichtliche Flanke 2 ist von ihrer Form her gesehen eine Handfeile. Ihre Randkontur ist gekrümmt oder mindestens wie in der Figur gezeigt abgeschrägt, sodass die Flanke 2 gegen die Feilenspitze hin verjüngt ist. Die Skizze unterhalb Figur 1 gibt die Richtung der Verzahnung des Feilenhiebes an.
Die Flanke 2 überragt die Flanke 3 in der Figur 1 auf der rechten Zeichnungsseite, wobei das überragende Teil als Kupplungsorgan 4 ausgebildet ist. Dieses Kupplungsorgan 4 weist sowohl unten wie auch oben einen einmal gegen die Flankenlängsmitte hin versetzten Längsrand 6,7 auf, sodass zwei senkrechte Stufen 8,9 gebildet werden. Die gegen unten gerichtete Stufe 8 ist dabei gegenüber der nach oben gerichteten Stufe 9 gegen den Feilenkörper hin etwas zurückversetzt. Die Längsränder 6,7 dienen zur Aufnahme der Reaktionskräfte des Auflagedruckes und durch die Stufe 9 wird eine Beaufschlagungsfläche für den Stössel gebildet. Das Kupplungsorgan 4 weist im Bereich der Stufe 9 ausserdem ein Querloch 10 auf, das zur Aufnahme eines entsprechenden Bolzens am Kupplungsorgan des nicht dargestellten Gerätes mit dem mechanischen Stössel bestimmt ist. Dieser Querbolzen zieht die Feile nach dem Stossen zurück. Der Rand des Kupplungsorgans 4 der Feile ist damit so geformt, dass er weitgehend formschlüssig an den Kupplungsteil des zu verwendenden Gerätes passt. Diese Geräte weisen üblicherweise eine Klemmschraube auf, mittels welcher der die Feile durchsetzende Bolzen durch eine Festklemmung gesichert wird. Diese Kupplung kann in allen Richtungen hohe auf die Feile wirkende Belastungen aufnehmen.

Die Figur 2 zeigt die Feile aus Figur 1 von unten gesehen. Die Flanke 3 ist längs ihrer ganzen Aussenseite behauen, weist parallele Längsränder auf und bildet so eine Maschinenfeile.
Die Figur 3 schliesslich zeigt die Feile aus Figur 1 von der Rückseite her gesehen. Die Innenseite 11 der Flanke 2 ist nicht behauen. Der gerade Rand 12 der als Maschinenfeile ausgebildeten Flanke 3 ist jedoch behauen und kann als Nutfeile benützt werden. Die Flanken 2 und 3 der Feile sind durch eine gerundete Kante miteinander verbunden, die an ihrer Aussenseite ebenfalls behauen ist und als Viertel-Rundfeile dienen kann. Die so gebildete Feile ist eine Mehrzweckfeile. Die Flanke 2 der Feile kann nämlich als Handfeile, die Flanke 3 als Maschinenfeile und die behauene Rundung 5 als Viertelrundfeile verwendet werden. Schliesslich kann der ebenfalls behauene, in Figur 3 ersichtliche Rand 12 der als Maschinenfeile ausgebildeten Flanke 3 als schmale Nutfeile eingesetzt werden. Bei der Form der durch das Behauen gebildeten Zähne der Feile muss man das nicht dargestellte Bearbeitungsgerät bei der Feilarbeit gegen die beim Feilvorgang entstehenden Reaktionskräfte stossen. Die eingespannte Feile wirkt also wie eine von Hand betätigte Feile beim Stossen.
Durch ihre Universalität ermöglicht diese Feile eine Vielzahl von Feilarbeiten. Durch ihre besondere Form erlaubt sie besonders auch maschinelle Bearbeitungen an schlecht zugänglichen Stellen, an die man mit Schleifmaschinen nicht oder nur schwerlich herankommt. Wird zudem ein Gerät verwendet, bei dem die Hublänge einstellbar ist, so können mit kleinen Hüben auch kurze, nur mit der Feilenspitze bearbeitbare Vorsprünge rationell gefeilt werden.

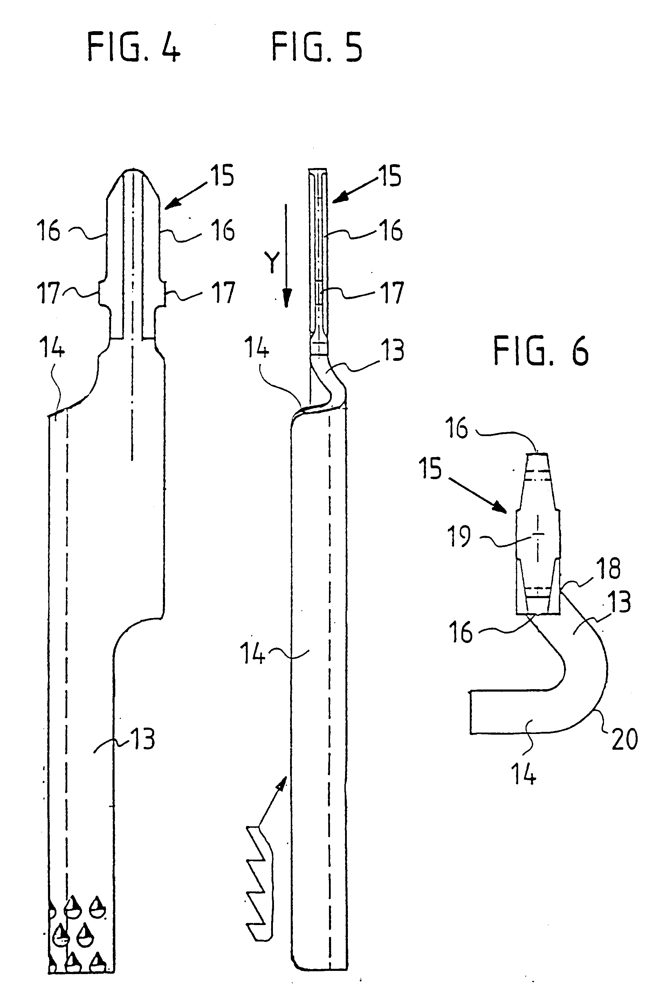

In den Figuren 4 bis 6 ist eine erfindungsgemässe Raspel zur Bearbeitung von Holz dargestellt. Die Figur 4 zeigt sie von der Seite her gesehen. Auch sie besteht im Prinzip aus einem einstückigen Winkelprofil mit zwei Flanken 13,14. Die längere Flanke 13 ist endseitig wiederum als Kupplungsorgan 15 ausgebildet. Dieses Kupplungsorgan 15 ist allerdings etwas anders gestaltet als jenes der bereits beschriebenen Feile. Es eignet sich zum Einsetzen der Raspel in ein handelsübliches Stichsägen-Gerät. Hierzu weist das Kupplungsorgan 15 an seinen beiden Längsrändern 16 je einen stufenartigen Vorsprung 17 auf, wobei die beiden Vorsprünge 17 einander gegenüberstehen. Weiter ist der Querschnitt des Kupplungsorgans 15 längs beider Ränder 16 beidseits gegen den Rand hin leicht verjüngt, und schliesslich ist das Ende des Kupplungsorgans 15 beidseitig leicht abgeschrägt. Das Kupplungsorgan am Stössel des zu verwendenden Stichsägen-Gerätes ist zylindrisch und weist in seinem Innern einen Längsschlitz auf, in den das Kupplungsorgan 15 eingeführt wird. Danach wird es mit dem Zylinder um 90° gedreht, wobei die Vorsprünge 17 auf Schultern von Nuten im Innern eines anderen Zylinders geschwenkt werden. Die Vorsprünge 17 am Kupplungsorgan 15 werden dann von oben mittels einer Sicherungsschraube gegen diese Schultern hin gedrückt, wodurch die Raspel sicher gehalten ist. Die Flanke 13 ist im vorderen Bereich der Raspel mit einer Ausnehmung versehen, sodass mit der Raspelspitze engere Bereiche zur Bearbeitung zugänglich werden.

Die Figur 5 zeigt die Raspel aus Figur 4 in einer Ansicht von rechts her gesehen. In einer vergrösserten Darstellung neben der Flanke 14 ist die Richtung der Verzahnung des Hiebes gezeigt. Die Raspel wirkt also im Gegensatz zur Feile dann, wenn sie gegen das Gerät hin gezogen wird.
Die Figur 6 schliesslich zeigt die Raspel aus Figur 5 in einer Ansicht von oben auf das Kupplungsorgan 15 in Richtung des Pfeils Y der Figur 5 gesehen. Wie hier gut zu erkennen ist, stehen die beiden Flanken 13 und 14 im wesentlichen in einem Winkel von etwa 50° zueinander. Die längere Flanke 13 weist gegen ihre freie Längsseite hin einen Längsknick 18 um etwa 40° auf, sodass der verlängerte Teil 19 jener Flanke 13, welcher endseitig als Kupplungsorgan 15 ausgebildet ist, im rechten Winkel zur kürzeren Flanke 14 steht. In Figur 6 ist ausserdem zu erkennen, wie das Kupplungsorgan längs beider Ränder 16 beidseits gegen den Rand hin leicht verjüngt ist.
Die beiden Flanken 13,14 sind aussen mitsamt der dazwischenliegenden Rundung 20 mit einem Raspelhieb versehen. Die so gebildete Raspel lässt sich daher universell und auch an schlecht zugänglichen Stellen einsetzen. Es versteht sich, dass natürlich auch eine Feile mit einem Kupplungsorgan wie hier zur Raspel offenbart versehen sein könnte oder eine Raspel mit einem Kupplungsorgan entsprechend jenem zur Feile beschriebenen. Die Werkzeuge wären dann mit den entsprechenden Geräten verwendbar.
Die erfindungsgemässe Feile oder Raspel erlaubt maschinelle Feil- und Raspelarbeiten für Bearbeitungen, wo sonst zum Teil Schleifwerkzeuge zum Einsatz kommen, die eine weit weniger gute Zugänglichkeit bieten als eine Feile oder Raspel. Gerade schlecht zugängliche Stellen an komplizierten Werkstücken, bei denen eine Handfeile oder Raspel nicht an der Spitze ergriffen werden kann oder wo die Stosslänge für die Bearbeitung sehr klein ist, werden dank der erfindungsgemässen Feile oder Raspel bequem und rationell bearbeitbar.

## Patentansprüche

1. Feile oder Raspel, mit einem
Feilen- oder Raspelkörper, der als einstückiges Winkelprofil (1) mit zwei in einem Winkel zueinanderstehenden Flanken (2,3;13,14) ausgebildet ist, wobei eine Flanke (2;13) die andere (3;14) in der Länge überragt und das überragende Teil (4;15) als Kupplungsorgan (4;15) ausgebildet ist, mittels dessen die Feile oder Raspel in allen Richtungen kraftschlüssig an einen mechanisch betätigten Stössel eines Gerätes kuppelbar ist, und wobei das Kupplungsorgan (4) sowohl unten wie auch oben einen einmal gegen die Flankenlängsmitte hin versetzten Längsrand (6,7) aufweist, sodass zwei senkrechte Stufen (8,9) gebildet werden, wobei die gegen unten gerichtete Stufe (8) gegenüber der nach oben gerichteten Stufe (9) zurückversetzt ist, und wobei im Bereich der Stufe (9) ausserdem ein Querloch (10) vorhanden ist, das zur Aufnahme eines Bolzens bestimmt ist.

2. Feile oder Raspel nach Anspruch 1, dadurch gekennzeichnet, dass das Kupplungsorgan (15) an seinen beiden Längsrändern (16) je einen stufenartigen Vorsprung (17) aufweist, wobei die beiden Vorsprünge (17) einander gegenüberstehen, und dass der Querschnitt des Kupplungsorgans (15) längs beider Ränder (16) beidseits gegen den Rand (16) hin verjüngt ist.

3. Feile oder Raspel nach einem der vorhergehenden Ansprüche, dadurch gekennzeichnet, dass die von den beiden Flanken (2,3;13,14) gebildeten Aussenkante gerundet ist und einen mit den beiden Flankenaussenseiten gemeinsamen, durchgehenden Feilen- bzw. Raspelhieb aufweist.

4. Feile oder Raspel nach einem der vorhergehenden Ansprüche, dadurch gekennzeichnet, dass der Winkel zwischen den beiden das winkelförmige Profil (1) bildenden Flanken (2,3) annähernd 90° beträgt.

5. Feile oder Raspel nach einem der vorhergehenden Ansprüche, dadurch gekennzeichnet, dass der Winkel zwischen den beiden das winkelförmige Profil bildenden Flanken (13,14) etwa 50° beträgt, wobei die verlängerte Flanke (13) gegen ihre freie Längsseite hin einen Längsknick (18) um etwa 40° aufweist, sodass der verlängerte Teil (19) jener Flanke (13), welcher als Kupplungsorgan (15) ausgebildet ist, im rechten Winkel zur kürzeren Flanke (14) steht.

6. Feile nach einem der vorhergehenden Ansprüche, dadurch gekennzeichnet, dass der freie Längsrand der längeren Flanke (2) einen Knick aufweist, nach dem diese Flanke (2) gegen die Feilen- oder Raspelspitze hin verjüngt ist.

7. Feile nach Anspruch 5, dadurch gekennzeichnet, dass der Längsrand der längeren Flanke (2) gekrümmt ist und so eine Handfeile bildet, dass der Längsrand der kürzeren Flanke (3) einen geraden Rand hat und so eine eine Maschinenfeile bildet, und dass der gerundete, behauene Uebergang (5) zwischen den beiden Flankenaussenseiten eine Viertel-Rundfeile bildet.

8. Feile nach einem der vorhergehenden Ansprüche, dadurch gekennzeichnet, dass der Längsrand (12) der kürzeren Flanke (3) behauen ist und eine schmale Nutfeile bildet.

9. Raspel nach Anspruch 5, dadurch gekennzeichnet, dass der geknickte Teil (19) der längeren Flanke (13), welcher zur kürzeren Flanke (14) in einem rechten Winkel steht, sich vom Kupplungsorgan (15) aus nur etwa bis zur Längsmitte der kürzeren Flanke (13) erstreckt.

## Claims

1. File or rasp with a body of the file or rasp which consists of an L-shaped profile (1) with two flanks (2, 3; 13, 14) arranged at an angle, one flank (2; 13) being longer than the other (3; 14) and the protruding part forming a fitting (4; 15) firmly fixeable into the adaptor of a mechanical power tool, said fitting (4) has two notches (6, 7) of different lengths that form two perpendicular steps (8, 9) in the end of the file, the lower notch formed by step (8) being longer than the side notch formed by step (9), and a hole (10) near the step (9) for the attachment of the file to the power tool by means of a bolt.

2. File or rasp according to claim 1, characterized in that the fitting (15) is designed with two opposing projections (17) on its edges (16), and that the cross-section of the fitting is slightly tapered toward its edges.

3. File or rasp according to one of the preceding claims, characterized in that the outer angle formed by the two flanks (2, 3; 13, 14) is rounded and forms with both flanks, a common hewn file or a rasp surface.

4. File or rasp according to one of the preceding claims, characterized in that the angle between the two flanks (2, 3) forming the profile (1) is about 90 degrees.

5. File or rasp according to one of the preceding claims, characterized in that the angle between the two flanks (13, 14) forming the L-shaped profile is about 50 degrees, the longer flank (13) being bent about 40 degrees (18) toward the free edge so that its prolongation (19) of the flank (13), which forms the fitting (15), is at a right angle to the shorter flank (14).

6. File according to one of the preceding claims, characterized in that the free edge of the longer flank (2) is tapered toward its end, starting at an angle in this free edge.

7. File according to claim 5, characterized in that the edge of the longer flank (2) is curved and thus forms a hand-held file-profile, the edge of the shorter flank (3) is straight and thus forms a machining file, and the outer, dressed (hewn) radius (5) forms a round file.

8. File according to one of the preceding claims, characterized in that the edge (12) of the shorter flank (3) is dressed (hewn) and thus forms a groove file.

9. Rasp according to claim 5, characterized in that the bent part (19) of the longer flank (13), which is at a right angle to the shorter flank (14), stretches from the fitting (15) to only half the length of the shorter flank (13).

## Revendications

1. Lime ou râpe, comportant un corps de lime ou de râpe, réalisé en profil angulaire (1) d'une seule pièce, avec deux flancs (2, 3; 13, 14) formant un angle entre eux, la longueur d'un des flancs (2; 13) dépassant celle de l'autre (3; 14), cependant que la partie dépassante (4; 15) constitue un organe d'accouplement (4; 15), au moyen duquel la lime ou la râpe peut être accouplée solidairement en tous sens à un coulisseau actionné mécaniquement d'un appareil et que l'organe d'accouplement (4) comporte aussi bien en bas qu'en haut un bord longitudinal (6, 7) décalé vers l'axe longitudinal des flancs, de sorte que deux étages perpendiculaires (8, 9) sont formés, l'étage (8) dirigé vers le bas étant en retrait par rapport à l'étage (9) dirigé vers le haut, cependant que dans la zone de l'étage (9) il existe en outre un trou perpendiculaire (10), destiné à recevoir un axe.

2. Lime ou râpe suivant la revendication 1, caractérisée en ce que l'organe d'accouplement (15) comporte sur chacun de ses deux bords longitudinaux (16) une saillie (17), les deux saillies (17) se faisant face, cependant que la section transversale de l'organe d'accouplement (15) est rétrécie des deux côtés, le long des deux bords (16), vers le bord (16).

3. Lime ou râpe suivant une des revendications précédentes, caractérisée en ce que l'arête extérieure formée par les deux flancs (2, 3; 13, 14) est arrondie et présente avec les deux faces extérieures des flancs une taille commune traversante de lime ou de râpe.

4. Lime ou râpe suivant une des revendications précédentes, caractérisée en ce que l'angle formé par les deux flancs (2, 3) constituant le profil angulaire (1) est d'environ 90°.

5. Lime ou râpe suivant une des revendications précédentes, caractérisée en ce que l'angle formé par les deux flancs (13, 14) constituant le profil angulaire est d'environ 50°, le flanc prolongé (13) présentant vers sa face longitudinale libre un pli longitudinal (18) d'environ 40°, de sorte que la partie prolongée (19) de ce flanc (13), partie formant l'organe d'accouplement (15), forme avec le flanc le plus court (14) un angle droit.

6. Lime suivant une des revendications précédentes, caractérisée en ce que le bord longitudinal libre du flanc le plus long (2) comporte un pli, après lequel ce flanc (2) est rétréci vers la pointe de la lime ou de la râpe.

7. Lime suivant la revendication 5, caractérisée en ce que le bord longitudinal du flanc le plus long (2) est courbe et forme ainsi une lime à main, que le bord longitudinal du flanc le plus court (3) a un bord droit et forme ainsi une lime pour machine et que le raccordement arrondi et taillé (5) se trouvant entre les deux faces extérieures des flancs forme une lime quart-de-ronde.

8. Lime suivant une des revendications précédentes, caractérisée en ce que le bord longitudinal (12) du flanc le plus court (3) est taillé et forme une étroite lime à rainures.

9. Râpe suivant la revendication 5, caractérisée en ce que la partie pliée (19) du flanc le plus long (13) formant un angle droit avec le flanc le plus court (14) s'étend, à partir de l'organe d' accouplement (15), seulement approximativement jusqu'à l'axe longitudinal du flanc le plus court (13).
